# EUROPEAN PATENT SPECIFICATION

(11) **EP 2 336 862 B1**
(45) Date of publication and mention of the grant of the patent: **10.07.2019**
(21) Application number: 11000399.3
(22) Date of filing: 21.09.2007
(51) Int. Cl.: G06F 3/041, G06F 3/044

(54) **Conductor pattern structure of capacitive touch panel**
Leitermusterstruktur eines kapazitiven Berührungsbildschirms
Structure de motif conducteur de panneau tactile capacitif

(30) Priority: 27.04.2007 CN 200720142844 U
(43) Date of publication of application: 22.06.2011
(62) Divisional of application: 07018556.6
(73) Proprietor: TPK Touch Solutions Inc., Taipei City 106 (TW)
(72) Inventor: Ching-Yang Chang, Hsinchu County 310 (TW); Shun-Ta Chien, Dayuan Township, Taoyoun County (TW)
(74) Representative: Goddar, Heinz J.

(56) References cited:
- US-A- 5 374 787
- US-A- 6 137 427
- US-A- 6 137 427
- US-A1- 2005 030 048

## Description

### FIELD OF THE INVENTION

The present invention relates to the field of touch panel devices, and in particular to a conductor pattern structure of a capacitive touch panel.

### BACKGROUND OF THE INVENTION

Touch panels have been of wide applications in the fields of household appliances, communications, and electronic information appliances. An example of the common applications of the touch panel is an input interface of a personal digital assistant (PDA), an electrical appliance, or a game machine, etc. The current trend of integration of a touch panel and a display panel allows a user to use his or her finger or a stylus to point a control icon shown on the panel in order to execute a desired function on a PDA, an electrical appliance or a game machine, etc. The touch panel is also applied in a public information inquiry system to provide an efficient operation system for the public.

A conventional touch panel comprises a substrate having a surface on which sensing zones are distributed for sensing a signal associated with the touch of a user's finger or stylus to effect input and control. The sensing zones are made of transparent conductive membranes, such as Indium Tin Oxide (ITO), whereby a user may touch the transparent conducive membrane corresponding to a specific location shown on the display to effect operation of the device.

The most commonly known types of touch panels include resistive panel, capacitive panel, infrared sensing panel, electromagnetic sensing panel, and sonic sensing panel. The capacitive touch panel employs a change in capacitance caused between a transparent electrode and the electrostatics of human body to induce a current based on which the touch location can be identified. The capacitive touch panel is advantageous in light transparency, hardness, precision, response time, touch cycles, operation temperature, and initiation force and is thus most commonly used currently.

In order to detect the location where a finger or a stylus touches the touch panel, a variety of capacitive touch panel techniques are developed. An example is US Patent No. 6,970,160, which discloses a lattice touch-sensing system for detecting a position of a touch on a touch-sensitive surface. The lattice touch-sensing system may include two capacitive sensing layers, separated by an insulating material, where each layer consists of substantially parallel conducting elements, and the conducting elements of the two sensing layers are substantially orthogonal to each other. Each element may comprise a series of diamond shaped patches that are connected together with narrow conductive rectangular strips. Each conducting element of a given sensing layer is electrically connected at one or both ends to a lead line of a corresponding set of lead lines. A control circuit may also be included to provide an excitation signal to both sets of conducting elements through the corresponding sets of lead lines, to receive sensing signals generated by sensor elements when a touch on the surface occurs, and to determine a position of the touch based on the position of the affected bars in each layer.

US Patent No. 4,233,522 discloses a capacitive touch panel comprising an array of touch sensitive switch cells. Each switch cell includes a first and a second pair of series connected capacitors energized by a common signal source, the array of switch cells being arranged so that the first pair of capacitors are connected in first groups of switch cells, such as rows, to a corresponding first plurality of signal detectors, and the second pair of capacitors are connected in second groups of switch cells, such as columns, to a corresponding second plurality of signal detectors, the junctions of each pair of capacitors of a single switch cell being selectively coupled to ground by the body or other touch capacitive means for actuating a selected switch cell.

US Patent No. 4,733,222 discloses a capacitance variation sensitive touch sensing array system including an array of electrodes, an array of drive lines, a drive signal generator, and an array of sense lines. Each electrode is a connected series of conductive tabs and forms either a row or a column of the electrode array. Each drive line is capacitively coupled to a plurality of the electrodes. The drive signal generator generates and applies alternating signal packets to the drive lines. The sense line is capacitively coupled to a plurality of the electrodes so that signals are derived from the electrodes when drive signals are applied to the drive lines. The number of electrodes is equal to the product of the number of drive lines and the number of sense lines. Based on values derived from signals on the sense lines, a microprocessor provides information associated with touch by an operator.

US Patent No. 5,880,411 discloses a method for recognizing a position made by a conductive object on a touch-sensor pad. Signals are sent to a control circuit of a host to identify the touch position. US Patent Nos. 6,414,671 and 5,374,787 disclose the same technique.

US Patent No. 7,030,860 discloses a transparent, capacitive sensing system particularly well suited for input to electronic devices. The capacitive sensor can further be used as an input device for a graphical user interface, especially if overlaid on top of a display device like an LCD screen to sense finger position and contact area over the display.

US Patent No. 5,459,463 discloses a device for locating an object situated close to a detection area and a transparent keyboard incorporating the device. The device comprises a first set of detection zones connected so as to form lines which extend parallel to each other and to a detection area, a second set of detection zones connected to each other so as to form columns which extend perpendicularly to the lines, a scanning device which applies an electric signal to the lines and columns, and means for determining the position of an object by means of the scanning device.

US Patent No. 6,498,590 discloses a multi-user touch system including a surface on which antennas are formed. A transmitter transmits uniquely identifiable signals to each antenna. Receivers are capacitively coupled to different users, and the receivers are configured to receive the uniquely identifiable signals. A processor then associates a specific antenna with a particular user when multiple users simultaneously touch any of the antennas.

US Patent No. 5,847,690 discloses a unitary display and sensing device, which integrates liquid crystal display module elements of a liquid crystal display module for detecting input on a flat panel display screen.

All the prior art references described above provide teaching of detection touch of a user on a touch panel and all are comprised of structures of touch sensing elements. However, these known devices are all of a construction including two capacitive sensing layers spaced from each other with an insulation material to effect capacitive effect between the layers. This makes the structure of the panel very thick and is thus against the trend of miniaturization. Further, the conventional capacitive touch panel comprises a substrate on both surfaces of which two capacitive sensing layers are formed respectively. In this respect, through holes must be formed on the substrate to serve as vias and circuit layering must be adopted to properly connect conductor elements of the sensing layers. This complicates the manufacturing of the capacitive touch panel.

Thus, it is desired to have a capacitive touch panel that overcomes the above drawbacks of the conventional capacitive touch panels.

A capacitive touch panel according to the preamble of claim 1 is known from US 6 137 427. This document discloses a touch pad comprising an insulating material deposited over a first series of conducting elements at intersection points to a second series of conducting elements. Thus, the insulating material is arranged to insulate the first and second conducting elements only at their intersection points. In order to detect the touch location on the touch pad, this document proposes a scanning system that samples each conductor element in turn, whereas the remaining conductor elements (which are not being sampled) are maintained at the same ground potential or Vsupply. A corresponding scanning system is disclosed in which a multiplexer sequentially switches between individual conductor elements, such as to connect for each sampling step a single conductor element to a capacitance controlled oscillator. In this way, a sequential sampling of the capacity value of each of the conductor elements is performed.

US 5 374 787 A discloses a proximity sensor adapted for of mutual capacitance detection. The sensor comprises a conductor pattern which is distributed on two opposite surfaces of a substrate, which in the embodiment shown is an opaque printed circuit board. On both surfaces, square-shaped or diamond-shaped opaque sense pads made from copper are provided, where the sense pads on the top surface are connected by first conductive traces and sense pads on the bottom surface are connected by second conductive traces extending in a direction orthogonal to the direction of the first conductive traces. On the top surface, twice as many diamond-shaped sense pads are provided than on the bottom surface, where sense pads on the bottom surface lie precisely under those sense pads of the first surface which are not connected by the first conductive traces, and are connected therewith by conductors placed in through holes through the substrate 12.

### SUMMARY OF THE INVENTION

Thus, an objective of the present invention is to provide a capacitive touch panel comprising a thin conductor pattern structure, which consists of a plurality of first-axis conductor assemblies and a plurality of second-axis conductor assemblies, each conductor assembly being comprised of a plurality of conductor cells interconnected by conduction lines, wherein the conduction lines extending in different axes are isolated from each other by an insulation layer.

Another objective of the present invention is to provide a capacitive touch panel comprising a conductor pattern structure consisting of first-axis conductor assemblies and second-axis conductor assemblies, both comprising conductors cells connected by conduction lines, the conductor cells and the conduction lines being formed on the same surface of a substrate by known processes for manufacturing general transparent conductor layer, whereby when a user touches the surface of the touch panel, the first-axis conductor assemblies and the second-axis conductor assemblies that are touched by the user induce capacitive effect between adjacent conductor cells thereof.

According to the present invention, a solution to overcome the above discussed drawbacks of the conventional capacitive touch panels is provided by the independent claims. Preferable embodiments are defined by the dependent claims.

As shown herein, a plurality of first-axis conductor
assemblies and a plurality of second-axis conductor assemblies, which constitute the conductor pattern structure of a capacitive touch panel, are formed on the same surface of a substrate, thereby simplifying the structure and reducing the thickness of the structure. When the conductor cells of the first-axis conductor assemblies and the conductor cells of the second-axis conductor assemblies that are adjacent to each other are touched by a user's finger, a capacitance variation signal is induced, in response to the area of the adjacent conductor cells on which the finger of the user is laid, and then applied to a control circuit to identify the position where the user's finger touches the panel. The first-axis conductor assemblies and the second-axis conductor assemblies of the conductor pattern structure can be formed on only one surface of the substrate by the general circuit laying techniques. Thus, the present invention can be practiced in a simple process with high passing rate and low costs.

### BRIEF DESCRIPTION OF THE DRAWINGS

The present invention will be apparent to those skilled in the art by reading the following description of preferred embodiments thereof, with reference to the attached drawings, in which:
Figure 1 is a plan view of a conductor pattern structure of a capacitive touch panel in accordance with a first embodiment of the present invention;
Figure 2 is a perspective view of a portion of the conductor pattern structure of the capacitive touch panel of the present invention;
Figure 3 is a cross-sectional view taken along line 3-3 of Figure 2;
Figure 4 is a cross-sectional view taken along line 4-4 of Figure 2;
Figure 5 illustrates a user's finger physically engaging a point on the capacitive touch panel in accordance with the present invention;
Figure 6 illustrates the user's finger engaging a different point on the capacitive touch panel of the present invention;
Figure 7 illustrates a schematic view of a surface of a substrate on which a plurality of first-axis conductor cells, first-axis conduction lines, signal transmission lines, and second-axis conductor cells are formed;
Figure 8 illustrates a schematic view of the substrate surface on which an insulation layer is formed to cover the surface of each first-axis conduction line, after the step of Figure 7;
Figure 9 illustrates a schematic view of the substrate surface on which a second-axis conduction line is formed to connect between each pair of adjacent second-axis conductor cells of the same second-axis conductor assembly, after the step of Figure 8; and
Figure 10 is a plan view of a conductor pattern structure of a capacitive touch panel in accordance with a second embodiment of the present invention.

### DETAILED DESCRIPTION

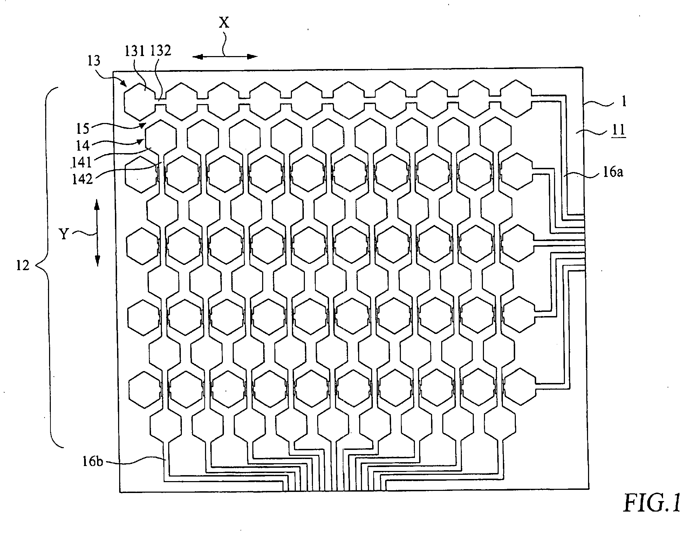

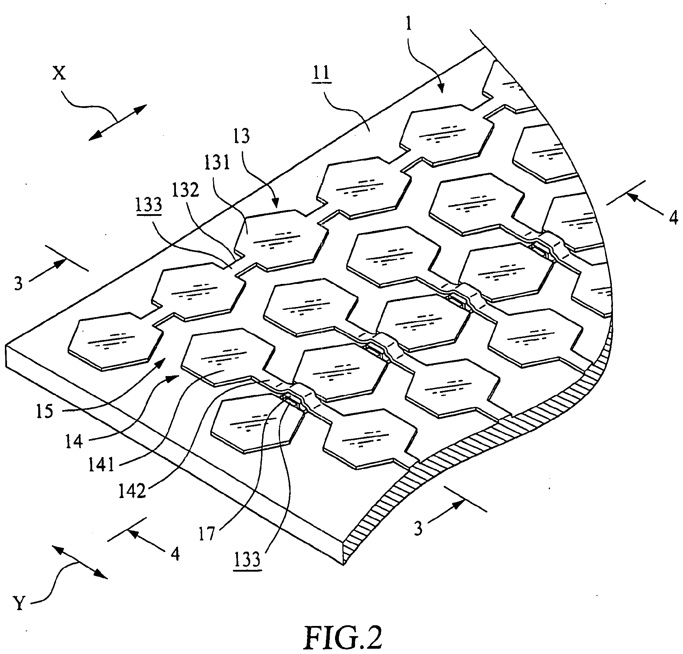

With reference to the drawings and in particular to Figures 1 and 2, of which Figure 1 illustrates a plan view of a conductor pattern structure of a capacitive touch panel in accordance with a first embodiment of the present invention and Figure 2 illustrates a perspective view of a portion of the conductor pattern structure of the capacitive touch panel generally designated with reference numeral 12, is formed on a surface 11 of a substrate 1. The conductor pattern structure 12 comprises a plurality of conductor assemblies 13 extending along a first axis, which will be referred to as "first-axis conductor assemblies", and a plurality of conductor assemblies 14 extending along a second axis, which will be referred to as "second-axis conductor assemblies". Each of the first-axis conductor assemblies 13 is parallel to other first-axis conductor assemblies 13, and each of the second-axis conductor assemblies 14 is parallel to other second-axis conductor assemblies 14. The first-axis conductor assemblies 13 are substantially perpendicular to the second-axis conductor assemblies 14. However, it is apparent that the first-axis conductor assemblies 13 and the second-axis conductor assemblies 14 can be arranged on the surface 11 of the substrate 1 at an included angle therebetween that is other than a right angle.

Each first-axis conductor assembly 13 is composed of a plurality of first-axis conductor cells 131 that are lined up along the first axis, which is designated at "X" in the drawings, on the surface 11 of the substrate 1 in a substantially equally-spaced manner and a disposition zone 15 is delimited between adjacent first-axis conductor assemblies 13 and adjacent first-axis conductor cells 131.

A first-axis conduction line 132 connects between adjacent first-axis conductor cells 131 positioned along the first axis X so that the first-axis conductor cells 131 along the first axis X are electrically connected together to form a first-axis conductor assembly 13. In other words, the first-axis conductor cells 131 of the same first-axis conductor assembly 13 are connected together in cascade by the first-axis conduction lines 132. Each first-axis conductor assembly 13 is further connected to a signal transmission line 16a for transmitting a signal to a control circuit laid on a circuit board (both not shown).

Each of the conduction lines 132 has a surface 133 that is covered by an insulation covering layer 17, which is made of a material featuring electric insulation, and preferably a transparent insulation material, such as silicon dioxide. Each second-axis conductor assembly 14 is composed of a plurality of second-axis conductor cells 141 that are lined up along the second axis, which is designated at "Y" in the drawings, in a substantially equally-spaced manner on the surface 11 of the substrate 1. Each second-axis conductor cell 141 is set in the respective second-axis conductor cell disposition zone 15.

A second-axis conduction line 142 connects between adjacent second-axis conductor cells 141 positioned along the second axis Y and extends over and across a surface of each insulation layer 17 so that the second-axis conductor cells 141 of the same second-axis conductor assembly 14 are connected together. In other words, the second-axis conductor cells 141 of the same second-axis conductor assembly 14 are connected together in cascade by the second-axis conduction lines 142. Each second-axis conductor assembly 14 is further connected to a signal transmission line 16b for transmitting a signal to the control circuit.

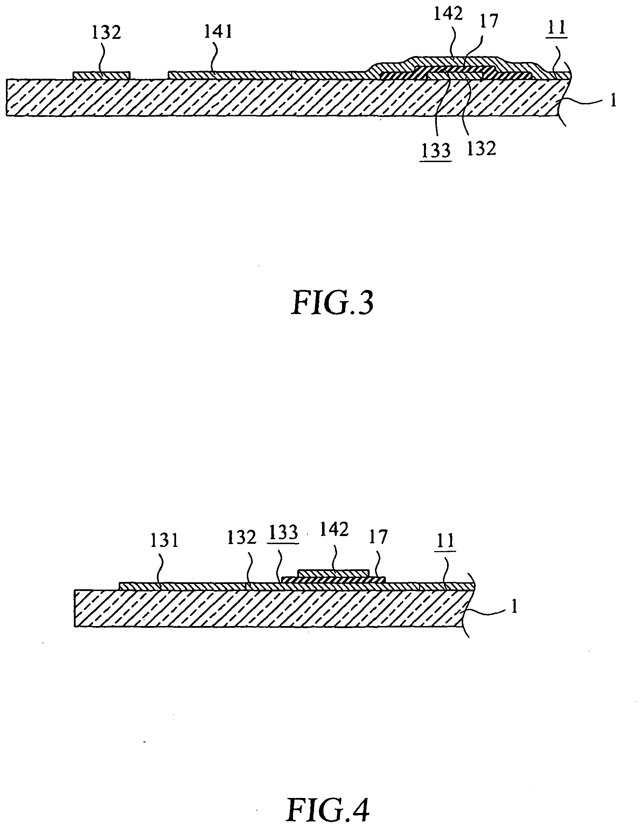

Also referring to Figure 3, which shows a cross-sectional view taken along line 3-3 of Figure 2, and Figure 4, which shows a cross-sectional view taken along line 4-4 of Figure 2, the first-axis conductor cells 131, the first-axis conduction lines 132, the second-axis conductor cells 141, and the second conduction lines 142 are made of transparent conductive material. The insulation layer 17 is interposed between the respective first-axis conduction line 132 and the second-axis conduction line 142 so that the second-axis conduction line 142 that connects adjacent second-axis conductor cells 141 of the second-axis conductor assembly 14 extends across the respectively first-axis conduction line 132 in a mutually-insulated manner.

The substrate 1 can be a glass substrate, and the first-axis conductor assemblies 13 and the second-axis conductor assemblies 14, and the first-axis and second-axis conduction lines 132, 142 are made of transparent conductive film, such as ITO conductive film. In the embodiment illustrated, the first-axis conductor cells 131 and the second-axis conductor cells 141 are of a shape of substantially hexagon geometry contour. It is apparent that the conductor cells 131, 141 can be of shapes of other geometry contours to effect an optimum distribution of effective conductor surface.

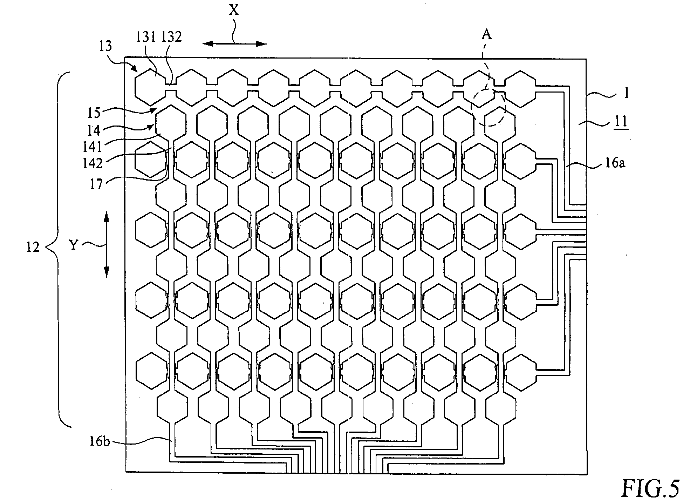

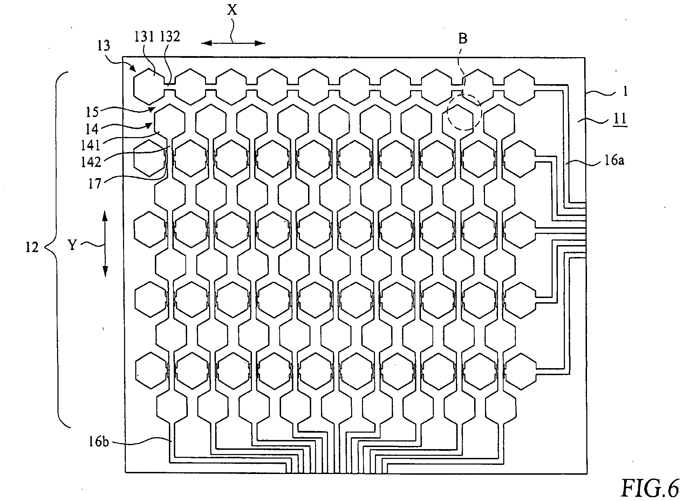

Figure 5 demonstrates a user's finger physically engaging a point on the capacitive touch panel in accordance with the present invention, and Figure 6 demonstrates the user's finger engaging a different point on the capacitive touch panel of the present invention. When a user put his or her finger to touch a contact area (point), designated at "A", on the capacitive touch panel of the present invention, the first-axis conductor cell 131 of the first-axis conductor assembly 13 and the second-axis conductor cell 141 of the second-axis conductor assembly 14, which are covered by the contact area A, induce a capacitor effect therebetween and a signal caused thereby is transmitted through the signal transmission lines 16a, 16b to the control circuit. The control circuit may then carry out computation to determine on which point on the surface 11 of the substrate 1 the contact area A is set.

When the user moves his or her finger to another contact area B, the first-axis conductor cell 131 of the first-axis conductor assembly 13 and the second-axis conductor cell 141 of the second-axis conductor assembly 14, which are covered by the contact area B, induce a capacitor effect therebetween and a change occurs, which induces a signal that is transmitted through the signal transmission lines 16a, 16b to the control circuit. The control circuit may then carry out computation to determine on which point on the surface 11 of the substrate 1 the contact area B is set.

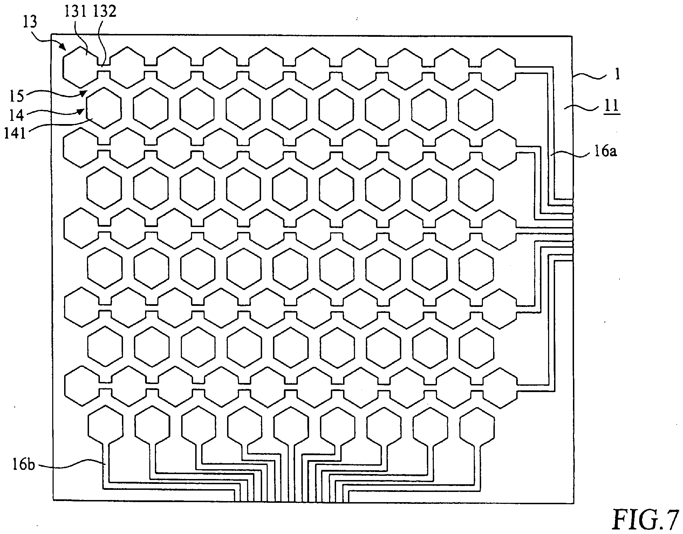

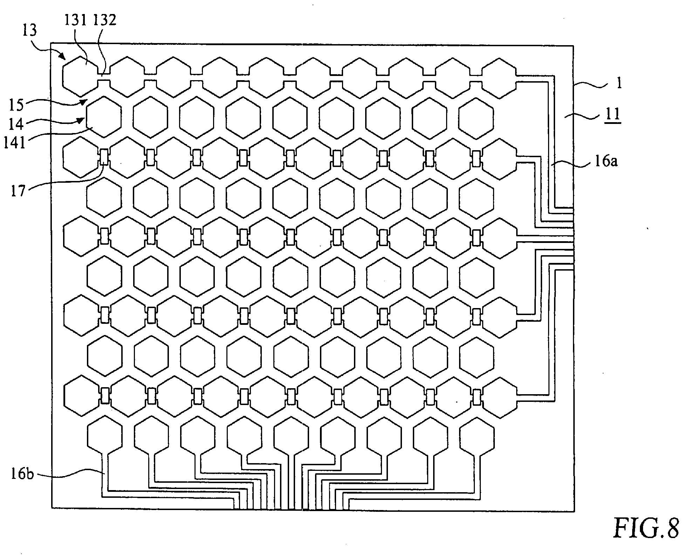

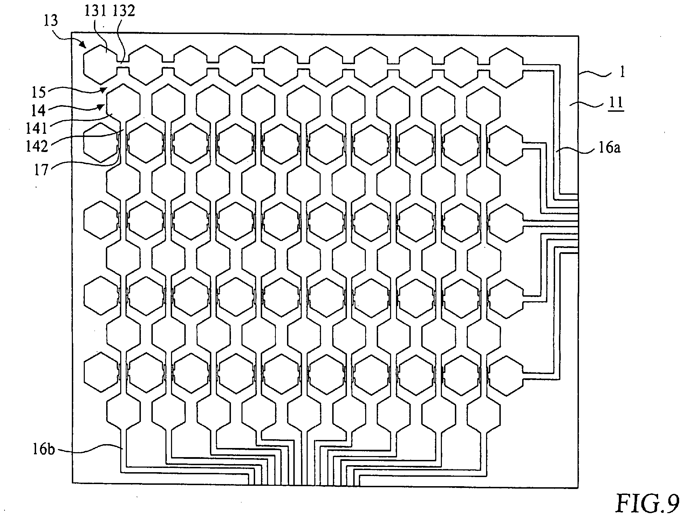

Figures 7 and 8 are schematic plan views demonstrating manufacturing steps of the conductor pattern of the capacitive touch panel in accordance with the present invention, wherein Figure 7 illustrates the schematic view of a surface of a substrate on which a plurality of first-axis conductor cells 131, first-axis conduction lines 132, signal transmission lines 16a, 16b, and second-axis conductor cells 141 are just formed, and Figure 8 illustrates the schematic view of the substrate surface on which an insulation covering layer 17 is formed to cover the surface of each first-axis conduction line 132, after the step of Figure 7. Further, Figure 9 illustrates a schematic view of the substrate surface on which a second-axis conduction line 142 is formed to connect between each pair of adjacent second-axis conductor cells 141 of the same second-axis conductor assembly, after the step of Figure 8, to thereby complete the manufacturing of the conductor pattern structure of the touch panel in accordance with the present invention.

The manufacturing of the conductor pattern structure 12 can be carried out with any known techniques, such as etching, sputtering, and screen printing. Etching is taken as an example for manufacture of the conductor pattern structure as follows. First of all, a conductor film, of which an ITO transparent conductive film is an example, is formed on the surface 11 of a cleaned substrate 1. Thereafter, screen printing is employed to carry out etching mask printing process.

After the etching mask printing process, etching is carried out on the surface 11, followed by film stripping. Thus, the first-axis conductor cells 131 of the first-axis conductor assemblies 13, the first conduction lines 132, and the second-axis conductor cells 141 of the second-axis conductor assemblies 14, all being transparent and electrically conductive, are formed on the substrate surface 11, as shown in Figure 7. At this point, all the first-axis conductor cells 131 of the same first-axis conductor assemblies 13 are electrically connected together and the first-axis conductor assemblies 13 are further connected to a plurality of signal transmission lines 16a.

Thereafter, an insulation covering layer 17 is applied to cover the surface 133 of each first-axis conduction line 132, as shown in Figure 8. Then, a mask is formed with the printing technique to define the positions of the second-axis conduction lines 142, followed by application of a transparent conductive layer to form the second-axis conduction lines 142 whereby the adjacent second-axis conductor cells 141 along the second axis Y are each connected by the second-axis conduction lines 142 with each second-axis conduction line 142 extending over and across the surface of the respective insulation layer 17, as shown in Figure 9. Once the step is done, all second-axis conductor cells 141 of the same second-axis conductor assemblies 14 are electrically connected together and the second-axis conductor assemblies 14 are connected to the signal transmission lines 16b.

When the etching technique described above is taken to form the conductor cells and the conduction lines on the substrate surface, different pattern can be formed with etching areas defined by different etching masks to similarly form a conductor pattern structure. For example, in the first etching step, only the first-axis conductor cells 131 and the first-axis conduction lines 132 of the first-axis conductor assemblies 13 are formed on the substrate surface 11, but not the second-axis conductor cells 141 of the second-axis conductor assemblies 14. Thereafter, the same etching technique is taken again to form the second-axis conductor cells 141 and the second-axis conduction lines 142 on the substrate surface 11, with the second conduction lines 142 extending over and across the surfaces of the associated insulation layers 17.

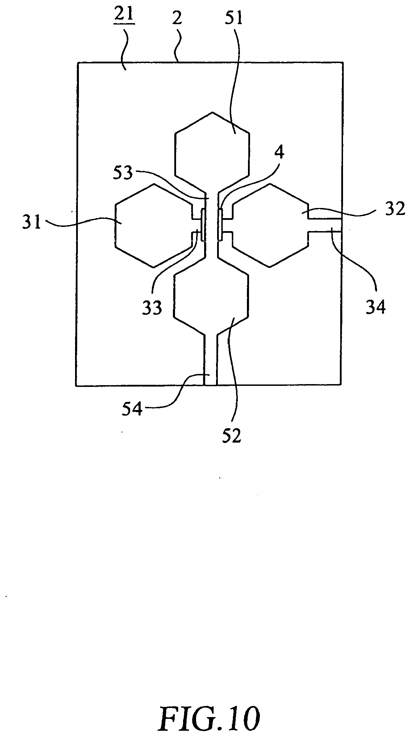

In the embodiment discussed previously, the first-axis conductor cells and the second-axis conductor cells are each formed on the substrate in an array form to constitute the conductor pattern structure of the capacitive touch panel. Based on the same philosophy, a small number of conductor cells can also be used to construct a conductor pattern structure of the capacitive touch panel. This is illustrated in Figure 10 as a second embodiment of the disclosure, wherein two adjacent first-axis conductor cells 31, 32 are formed on a surface 21 of a substrate 2 and a signal transmission line 34 is connected to the conductor cell 32. A first-axis conduction line 33 connects between the adjacent first-axis conductor cells 31, 32. An insulation layer 4 is formed on a surface of the first-axis conduction line 33.

Along an axis that is different from the first-axis conductor cells 31, 32, two adjacent second-axis conductor cells 51, 52 are arranged and a second-axis conduction lines 53 connects between the adjacent second-axis conductor cells 51, 52 by extending over and across a surface of the insulation layer 4. The conductor cell 52 is also connected to a signal transmission line 54.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A capacitive touch panel comprising a conductor pattern structure (12) formed on a surface (11) of a substrate (1), the conductor pattern structure (12) comprising:
a plurality of first-axis conductor assemblies (13), each first-axis conductor assembly comprising a plurality of first-axis conductor cells (131) arranged on the surface (11) of the substrate (1) along a first axis in a substantially equally-spaced manner, a disposition zone (15) being delimited between adjacent ones of the first-axis conductor assemblies (13) and between adjacent ones of the first-axis conductor cells (131);
a plurality of first-axis conduction lines (132) respectively connecting between adjacent ones of the first-axis conductor cells (131) of each first-axis conductor assembly (13) so that the first-axis conductor cells (131) of each respective first-axis conductor assembly (13) are electrically connected together;
a plurality of insulation layers (17), each covering a surface (133) of each first-axis conduction line (132);
a plurality of second-axis conductor assemblies (14), each second-axis conductor assembly (14) comprising a plurality of second-axis conductor cells (141) arranged on the surface (11) of the substrate (1) along a second axis in a substantially equally-spaced manner, each second-axis conductor cell (141) being set in a corresponding disposition zone (15);
a plurality of second-axis conduction lines (142) respectively connecting between adjacent ones of the second-axis conductor cells (141) of each second-axis conductor assembly (14) so that the second-axis conductor cells (141) of each respective second-axis conductor assembly (14) are electrically connected together, the second-axis conduction line (142) being extended across a surface of the insulation layer (17) of the respective first-axis conduction line (132);
wherein first-axis conductor cells (131) and the second-axis conductor cells (141) consist of a transparent conductive material; and wherein said capacitive touch panel further comprises a control circuit, **characterized in that** when a user puts his or her finger to touch a contact area (A) on the capacitive touch panel, a first-axis conductor cell (131) of the first-axis conductor assembly (13) and a second-axis conductor cell (141) of the second-axis conductor assembly (14), which are covered by the contact area (A), induce a capacitor effect therebetween, and a capacitance variation signal caused thereby is transmitted through signal transmission lines (16a, 16b) to said control circuit, for determining, by a computation carried out by the control circuit, on which point on the surface (11) of the substrate (1) the contact area (A) is set.

2. The capacitive touch panel as claimed in claim 1, wherein the first-axis conduction lines (132) and the second-axis conduction lines (142) consist of a transparent conductive material.

3. The capacitive touch panel as claimed in claim 1 or 2, wherein the insulation layer (17) consists of a transparent insulation material.

4. The capacitive touch panel as claimed in claim 1 or 2, wherein the transparent conducive material is indium tin oxide (ITO).

5. The capacitive touch panel of one of the preceding claims, wherein the first-axis conductor cells (131) and the second-axis conductor cells (141) have a contour of hexagonal shape.

6. A method of constructing a capacitive touch panel comprising a conductor pattern structure (12), the method comprising:
forming a plurality of first-axis conductor cells (131) on a surface (11) of a substrate (1) arranged along a first axis in a substantially equally-spaced manner,
forming a plurality of second-axis conductor cells (141) on the surface (11) of the substrate (1) arranged along a second axis in a substantially equally-spaced manner;
forming a plurality of first-axis conduction lines (132) electrically connecting adjacent ones of the first-axis conductor cells (131) along the first-axis to form a plurality of first-axis conductor assemblies (13), wherein each second-axis conductor cell (131) is set in a disposition (15) zone being delimited between adjacent ones of the first-axis conductor assemblies (13) and between adjacent ones of the first-axis conductor cells (131);
forming a plurality of insulation layers (17) covering a surface of each first-axis conduction line (132); and
electrically connecting adjacent ones of the second-axis conductor cells (141) along the second-axis using a plurality of second-axis conduction lines (142) to form a plurality of second-axis conductor assemblies (14), each of the first-axis conductor cells (141) and the second-axis conductor cells (142) consisting of a transparent conductive material;
wherein said method further comprises a step of providing a control circuit,
**characterized in that** said conductor pattern structure (12) and said control circuit are such that when a user puts his or her finger to touch a contact area (A) on the capacitive touch panel, a first-axis conductor cell (131) of the first-axis conductor assembly (13) and a second-axis conductor cell (141) of the second-axis conductor assembly (14), which are covered by the contact area (A), induce a capacitor effect therebetween, and a capacitance variation signal caused thereby is transmitted through signal transmission lines (16a, 16b) to said control circuit, for determining, by a computation carried out by the control circuit, on which point on the surface (11) of the substrate (1) the contact area (A) is set.

7. The method of claim 6, wherein the first-axis conduction lines (132) and said second-axis conduction lines (142) consist of a transparent conductive material.

8. The method of claim 6 or 7, wherein the first-axis conductor cells (131) and the second-axis conductor cells (141) have a contour of hexagonal shape.

9. The method of one of claims 6 to 8, wherein the transparent conductive material is indium tin oxide (ITO).

## Patentansprüche

1. Kapazitives Touchpanel, welches eine Leiter-Musterstruktur (12) umfasst, die auf einer Oberfläche (11) eines Substrats (1) ausgebildet ist, wobei die Leiter-Musterstruktur (12) Folgendes umfasst:
eine Mehrzahl von Erste-Achse-Leiteranordnungen (13), wobei eine jede Erste-Achse-Leiteranordnung eine Mehrzahl von Erste-Achse-Leiterzellen (131) umfasst, die auf der Oberfläche (11) des Substrats (1) entlang einer ersten Achse in einer im Wesentlichen gleichförmig beabstandeten Weise angeordnet sind, eine Dispositionszone (15), die zwischen Benachbarten der Erste-Achse-Leiteranordnungen (13) und zwischen Benachbarten der Erste-Achse-Leiterzellen (131) eingegrenzt ist;
eine Mehrzahl von Erste-Achse-Leitungs-Leitungen (132), die jeweils eine Verbindung zwischen benachbarten Erste-Achse-Leiterzellen (131) einer jeden Erste-Achse-Leiteranordnungen (13) herstellen, so dass die Erste-Achse-Leiterzellen (131) einer jeweiligen Erste-Achse-Leiteranordnung (13) elektrisch miteinander verbunden sind;
eine Mehrzahl von Isolationsschichten (17), die jeweils eine Oberfläche (133) einer jeweiligen Erste-Achse-Leitungs-Leitung (132) bedecken;
eine Mehrzahl von Zweite-Achse-Leiteranordnungen (14), wobei eine jede Zweite-Achse-Leiteranordnung (14) eine Mehrzahl von Zweite-Achse-Leiterzellen (141) umfasst, die auf der Oberfläche (11) des Substrats (1) entlang einer zweiten Achse in einer im Wesentlichen gleichförmig beabstandeten Weise angeordnet sind, wobei eine jede Zweite-Achse-Leiterzelle (141) in einer zugehörigen Dispositionszone (15) angeordnet ist;
eine Mehrzahl von Zweite-Achse-Leitungs-Leitungen (142), die jeweils eine Verbindung zwischen benachbarten Zweite-Achse-Leiterzellen (141) einer jeden Zweite-Achse-Leiteranordnungen (14) herstellen, so dass die Zweite-Achse-Leiterzellen (141) einer jeden zugehörigen Zweite-Achse-Leiteranordnung (14) elektrisch miteinander verbunden sind, wobei die Zweite-Achse-Leitungs-Leitung (142) sich über eine Oberfläche der Isolationsschicht (17) der jeweiligen Erste-Achse-Leitungs-Leitung (132) erstreckt;
wobei die Erste-Achse-Leiterzellen (131) und die Zweite-Achse-Leiterzellen (141) aus einem transparenten leitfähigen Material bestehen; und wobei das kapazitive Touchpanel ferner eine Steuereinheit umfasst, **dadurch gekennzeichnet, dass** wenn ein Nutzer oder eine Nutzerin seinen/ihren Finger auflegt, um einen Kontaktbereich (A) auf dem kapazitiven Touchpanel zu berühren, eine Erste-Achse-Leiterzelle (131) der Erste-Achse-Leiteranordnung (13) und eine Zweite-Achse-Leiterzelle (141) der Zweite-Achse-Leiteranordnung (14), die durch den Kontaktbereich (A) abgedeckt werden, einen Kondensatoreffekt zwischen sich induzieren, und ein dadurch verursachtes Kapazitäts-Änderungssignal durch Signalübertragungsleitungen (16a, 16b) zu der Steuerschaltung übertragen werden, um durch eine von der Steuerschaltung ausgeführte Berechnung zu ermitteln, auf welchem Punkt der Oberfläche (11) des Substrats (1) sich der Kontaktbereich (A) befindet.

2. Kapazitives Touchpanel nach Anspruch 1, wobei die Erste-Achse-Leitungs-Leitungen (132) und die Zweite-Achse-Leitungs-Leitungen (142) aus einem transparenten leitfähigen Material bestehen.

3. Kapazitives Touchpanel nach Anspruch 1 oder 2, wobei die Isolationsschicht (17) aus einem transparenten Isolationsmaterial besteht.

4. Kapazitives Touchpanel nach Anspruch 1 oder 2, wobei das transparente leitfähige Material Indiumzinnoxid (ITO) ist.

5. Kapazitives Touchpanel nach einem der vorhergehenden Ansprüche, wobei die Erste-Achse-Leiterzellen (131) und die Zweite-Achse-Leiterzellen (141) eine Kontur mit sechseckiger Form haben.

6. Verfahren zum Aufbauen eines kapazitiven Touchpanels, welches eine Leiter-Musterstruktur (12) umfasst, wobei das Verfahren Folgendes umfasst:
Ausbilden einer Mehrzahl von Erste-Achse-Leiterzellen (131) auf einer Oberfläche (11) eines Substrats (1), die entlang einer ersten Achse in einer im Wesentlichen gleichförmig beabstandeten Weise angeordnet sind,
Ausbilden einer Mehrzahl von Zweite-Achse-Leiterzellen (141) auf der Oberfläche (11) des Substrats (1) entlang einer zweiten Achse in einer im Wesentlichen gleichförmig beabstandeten Weise;
Ausbilden einer Mehrzahl von Erste-Achse-Leitungs-Leitungen (132), die benachbarte Erste-Achse-Leiterzellen (131) entlang der ersten Achse elektrisch verbinden, um eine Mehrzahl von Erste-Achse-Leiteranordnungen (13) zu bilden, wobei eine jede Zweite-Achse-Leiterzelle (131) in einer Dispositionszone (15) angeordnet wird, die durch benachbarte Erste-Achse-Leiteranordnungen (13) und zwischen benachbarten Erste-Achse-Leiterzellen (131) eingegrenzt ist;
Ausbilden einer Mehrzahl von Isolationsschichten (17), die eine Oberfläche einer jeden Erste-Achse-Leitungs-Leitung (132) bedecken; und
elektrisches Verbinden von benachbarten Zweite-Achse-Leiterzellen (141) entlang der zweiten Achse unter Verwendung einer Mehrzahl von Zweite-Achse-Leitungs-Leitungen (142), um eine Mehrzahl von Zweite-Achse-Leiteranordnungen (14) zu bilden, wobei eine jede der Erste-Achse-Leiterzellen (141) und der Zweite-Achse-Leiterzellen (142) aus einem transparente leitfähigen Material besteht;
wobei das Verfahren ferner einen Schritt umfasst, in dem eine Steuerschaltung bereitgestellt wird,
**dadurch gekennzeichnet, dass** die Leiter-Musterstruktur (12) und die Steuerschaltung so geartet sind, dass, wenn ein Nutzer oder eine Nutzerin seinen/ihren Finger auflegt, um einen Kontaktbereich (A) auf dem kapazitiven Touchpanel zu berühren, eine Erste-Achse-Leiterzelle (131) der Erste-Achse-Leiteranordnung (13) und eine Zweite-Achse-Leiterzelle (141) der Zweite-Achse-Leiteranordnung (14), die von dem Kontaktbereich (A) abgedeckt sind, einen Kondensatoreffekt zwischen sich induzieren, und ein dadurch verursachtes Kapazitäts-Veränderungssignal durch Signalübertragungsleitungen (16a, 16b) zu der Steuerschaltung übertragen werden, um durch eine von der Steuerschaltung durchgeführte Berechnung zu ermitteln, auf welchem Punkt der Oberfläche (11) des Substrats (1) sich der Kontaktbereich (A) befindet.

7. Verfahren nach Anspruch 6, wobei die Erste-Achse-Leitungs-Leitungen (132) und die Zweite-Achse-Leitungs-Leitungen (142) aus einem transparenten leitfähigen Material bestehen.

8. Verfahren nach Anspruch 6 oder 7, wobei die Erste-Achse-Leiterzellen (131) und die Zweite-Achse-Leiterzellen (141) eine Kontur mit sechseckiger Form haben.

9. Verfahren nach einem der Ansprüche 6 bis 8, wobei das transparente leitfähige Material Indiumzinnoxid (ITO) ist.

## Revendications

1. Panneau tactile capacitif comprenant une structure de motif conducteur (12) formée sur une surface (11) d'un substrat (1), la structure de motif conducteur (12) comprenant :
une pluralité d'ensembles conducteurs de premier axe (13), chaque ensemble conducteur de premier axe comprenant une pluralité de cellules conductrices de premier axe (131) agencées sur la surface (11) du substrat (1) le long d'un premier axe d'une manière avec des espacements sensiblement égaux, une zone de disposition (15) étant délimitée entre les ensembles adjacents parmi les ensembles conducteurs de premier axe (13) et entre les cellules adjacentes parmi les cellules conductrices de premier axe (131) ;
une pluralité de lignes de conduction de premier axe (132) connectant respectivement les cellules adjacentes parmi les cellules conductrices de premier axe (131) de chaque ensemble conducteur de premier axe (13) de sorte que les cellules conductrices de premier axe (131) de chaque ensemble conducteur de premier axe (13) respectif soient connectées électriquement les unes aux autres ;
une pluralité de couches d'isolement (17), recouvrant chacune une surface (133) de chaque ligne de conduction de premier axe (132) ;
une pluralité d'ensembles conducteurs de deuxième axe (14), chaque ensemble conducteur de deuxième axe (14) comprenant une pluralité de cellules conductrices de deuxième axe (141) agencées sur la surface (11) du substrat (1) le long d'un deuxième axe d'une manière avec des espacements sensiblement égaux, chaque cellule conductrice de deuxième axe (141) étant placée dans une zone de disposition (15) correspondante ;
une pluralité de lignes de conduction de deuxième axe (142) connectant respectivement les cellules adjacentes parmi les cellules conductrices de deuxième axe (141) de chaque ensemble conducteur de deuxième axe (14) de sorte que les cellules conductrices de deuxième axe (141) de chaque ensemble conducteur de deuxième axe (14) respectif soient connectées électriquement les unes aux autres, la ligne de conduction de deuxième axe (142) s'étendant à travers une surface de la couche d'isolement (17) de la ligne de conduction de premier axe (132) respective ;
dans lequel les cellules conductrices de premier axe (131) et les cellules conductrices de deuxième axe (141) consistent en un matériau conducteur transparent ; et dans lequel ledit panneau tactile capacitif comprend en outre un circuit de commande, **caractérisé en ce que**, lorsqu'un utilisateur place son doigt pour toucher une zone de contact (A) sur le panneau tactile capacitif, une cellule conductrice de premier axe (131) de l'ensemble conducteur de premier axe (13) et une cellule conductrice de deuxième axe (141) de l'ensemble conducteur de deuxième axe (14), qui sont couvertes par la zone de contact (A), induisent un effet capacitif entre elles, et un signal de variation de capacitance généré de ce fait est transmis à travers des lignes de transmission de signal (16a, 16b) audit circuit de commande, pour déterminer, par un calcul effectué par le circuit de commande, sur quel point sur la surface (11) du substrat (1) la zone de contact (A) est placée.

2. Panneau tactile capacitif selon la revendication 1, dans lequel les lignes de conduction de premier axe (132) et les lignes de conduction de deuxième axe (142) consistent en un matériau conducteur transparent.

3. Panneau tactile capacitif selon la revendication 1 ou 2, dans lequel la couche d'isolement (17) consiste en un matériau d'isolement transparent.

4. Panneau tactile capacitif selon la revendication 1 ou 2, dans lequel le matériau conducteur transparent est l'oxyde d'étain-indium (ITO).

5. Panneau tactile capacitif selon l'une des revendications précédentes, dans lequel les cellules conductrices de premier axe (131) et les cellules conductrices de deuxième axe (141) ont un contour de forme hexagonale.

6. Procédé de construction d'un panneau tactile capacitif comprenant une structure de motif conducteur (12), le procédé comprenant :
la formation d'une pluralité de cellules conductrices de premier axe (131) sur une surface (11) d'un substrat (1) agencées le long d'un premier axe d'une manière avec des espacements sensiblement égaux,
la formation d'une pluralité de cellules conductrices de deuxième axe (141) sur la surface (11) du substrat (1) agencées le long d'un deuxième axe d'une manière avec des espacements sensiblement égaux ;
la formation d'une pluralité de lignes de conduction de premier axe (132) connectant électriquement les cellules adjacentes parmi les cellules conductrices de premier axe (131) le long du premier axe pour former une pluralité d'ensembles conducteurs de premier axe (13), dans lequel chaque cellule conductrice de deuxième axe (131) est placée dans une zone de disposition (15) délimitée entre les ensembles adjacents parmi les ensembles conducteurs de premier axe (13) et entre les cellules adjacentes parmi les cellules conductrices de premier axe (131) ;
la formation d'une pluralité de couches d'isolement (17) recouvrant une surface de chaque ligne de conduction de premier axe (132) ; et
la connexion électrique des cellules adjacentes parmi les cellules conductrices de deuxième axe (141) le long du deuxième axe en utilisant une pluralité de lignes de conduction de deuxième axe (142) pour former une pluralité d'ensembles conducteurs de deuxième axe (14), chacune des cellules conductrices de premier axe (141) et des cellules conductrices de deuxième axe (142) consistant en un matériau conducteur transparent ;
dans lequel ledit procédé comprend en outre une étape de fourniture d'un circuit de commande,
**caractérisé en ce que** ladite structure de motif conducteur (12) et ledit circuit de commande sont tels que, lorsqu'un utilisateur place son doigt pour toucher une zone de contact (A) sur le panneau tactile capacitif, une cellule conductrice de premier axe (131) de l'ensemble conducteur de premier axe (13) et une cellule conductrice de deuxième axe (141) de l'ensemble conducteur de deuxième axe (14), qui sont recouvertes par la zone de contact (A), induisent un effet capacitif entre elles, et un signal de variation de capacitance généré de ce fait est transmis par l'intermédiaire de lignes de transmission de signal (16a, 16b) audit circuit de commande, pour déterminer, par un calcul effectué par le circuit de commande, sur quel point sur la surface (11) du substrat (1) la zone de contact (A) est placée.

7. Procédé selon la revendication 6, dans lequel les lignes de conduction de premier axe (132) et lesdites lignes de conduction de deuxième axe (142) consistent en un matériau conducteur transparent.

8. Procédé selon la revendication 6 ou 7, dans lequel les cellules conductrices de premier axe (131) et les cellules conductrices de deuxième axe (141) ont un contour de forme hexagonale.

9. Procédé selon l'une des revendications 6 à 8, dans lequel le matériau conducteur transparent est l'oxyde d'étain-indium (ITO).
